Europäisches Patentamt

(19) European Patent Office

Office européen des brevets

(11) Publication number: **0 075 462**
**B1**

(12) **EUROPEAN PATENT SPECIFICATION**

(45) Date of publication of patent specification: **08.07.87**

(21) Application number: **82304914.3**

(22) Date of filing: **17.09.82**

(51) Int. Cl.⁴: **B 62 K 25/08**

(54) Motorcycle front fork anti-dive device.

(30) Priority: **19.09.81 JP 148030/81**

(43) Date of publication of application:
**30.03.83 Bulletin 83/13**

(45) Publication of the grant of the patent:
**08.07.87 Bulletin 87/28**

(84) Designated Contracting States:
**DE FR GB IT**

(56) References cited:
**FR-A-1 586 788**
**US-A-3 989 261**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Kawaguchi, Takeshi**
**2-25-7, Yamamuro**
**Fujimi-shi Saitama (JP)**
Inventor: **Ishikawa, Yoshimi**
**3-7-15, Narimasu Itabashi-ku**
**Tokyo (JP)**
Inventor: **Oonishi, Taizo**
**4-3-6, Hizaori-cho**
**Asaka-shi Saitama (JP)**

(74) Representative: **Leale, Robin George et al**
**FRANK B. DEHN & CO. Imperial House 15-19**
**Kingsway**
**London WC2B 6UZ (GB)**

Courier Press, Leamington Spa, England.

## Description

This invention relates to an anti-dive device for the telescopic front fork of a motorcycle or the like, to prevent it from diving when the front wheel brake is applied. Typically, such a front fork includes a bottom case which carries the front wheel axle and which is fixed to an outer tube which slidably receives a fork pipe in telescopic relation. In such conventional construction, the front fork is contracted when the front wheel brake is applied. This diving action is caused by the shift of the center of gravity, and inertia, and the front fork is fully contracted during an abrupt braking operation.

In order to prevent the front portion of the motorcycle body from diving when the front wheel is braked, there have been proposed in the prior art various types of anti-dive systems, which operate by detecting the presence of braking torque in terms of the shift of a member which receives the reaction to the braking force. Such shift automatically blocks the passage of oil between chambers in the telescopic front fork.

Thus United States Patent No. 3989261 discloses a telescopic front fork assembly for a motorcycle or the like, having a bottom case fast with an outer tube of the front fork and carrying the axle for the front wheel, and a brake support member which is movable relative to said bottom case in response to braking torque applied to the wheel, an anti-dive device comprising a contraction regulator fast with said bottom case and having a main oil passage therein, two further oil passage communicating the interior of said bottom case with said main oil passage for oil to flow therethrough during contraction of the telescopic assembly, a contraction regulating piston in said main oil passage, and connecting means between said piston and said brake support member for operating said piston by said movement of said support member upon braking, in which the said two further oil passages comprise spaced openings in said bottom case communicating with said main oil passage, and said connecting means comprises a lever pivotally mounted on said bottom case and having a first arm coupled with said contraction regulating piston and a second arm coupled with said support member.

However, the apparatus the said United States Patent has the disadvantage that the said contraction regulating piston and the said brake support member are located on opposite sides of the said bottom case, with the lever which interconnects them extending transversely across the front fork tube, which makes for a bulky assembly in a context where simple, compact and lightweight design is of the utmost importance.

The present invention is characterised in that the said lever (10) is a bell crank lever comprising said first arm (12) which is connected to said contraction regulating piston (38), and said second arm (11) which is connected to a part of said brake support member (7), the said contraction regulator (30) and said bell crank lever (10) both being located at the same side of said bottom case (2), and the direction of movement of said contraction regulating piston (38) being radial with respect to the axis of said outer tube.

Preferably said arm (12) of said bell crank lever (10) which is connected to said contraction regulating piston (38) extends alongside said bottom case and is also movable radially with respect to the axis of said outer tube.

Preferably said contraction regulator device (30) and said bell crank lever (10) are both located at the forward side of said bottom case (2), and a brake caliper (6) is located at the rearward side thereof.

Preferably a tension link (15) connects said second arm (11) of said bell crank lever (10) to a part of said brake support member (7) remote from said brake caliper.

Figure 1 is a sectional side elevation partly broken away, showing a preferred embodiment of this invention;

Figure 2 constitutes an enlargement of a portion of Figure 1;

Figure 3 is an end view of a casing for the contraction regulator shown in Figures 1 and 2;

Figure 4 is a side elevation thereof;

Figure 5 is a sectional view taken substantially on the line 5—5 in Figure 4;

Figure 6 is a sectional view taken substantially on the line 6—6 in Figure 3;

Figure 7 is a sectional view taken substantially on the line 7—7 in Figure 6;

Figure 8 is a sectional detail taken substantially on the line 8—8 in Figure 7; and

Figure 9 is a bottom plan view taken substantially in the direction of the line 9—9 in Figure 4.

Referring to the drawings, the telescopic front fork 1 of a motorcycle is constructed to include a bottom case 2 in which a fork pipe, not shown, is slidably mounted for telescopic movement. In the bottom portion of the bottom case 2 there is internally mounted a front wheel axle 3 on which the motorcycle front wheel 4 is rotatably mounted by means of bearings, not shown. On respective sides of the wheel hub 5 of the front wheel 4 there are integrally mounted two annular brake disks, not shown, and a brake caliper 6 is positioned to straddle the radially inner portions of such annular brake disks. The brake caliper 6 is detachably mounted by means of a bolt 8 on a caliper supporting bracket 7 which acts as a torque receiving means.

A projection 9 formed integrally with the bottom case 2 protrudes from the forward side thereof and carries a pivot pin 13 which supports an L-shaped bell crank 10. The bell crank 10 has a short arm 11 of effective length $L_1$ and a long arm 12 of effective length $L_2$. A tension rod 15 is connected by pivot pin 14 to the short arm 11 and is connected at its other end by pivot pin 16 to the caliper supporting bracket 7. The long arm 12 is bifurcated to accept a portion of a casing 31 of a contraction regulator 30 to be described below, and carries a pin 17 fixed to the leading ends of the bifurcated portion. The pin 17 is freely received in an opening 34 in the casing 31. The casing 31 is fixed to the forward lower portion of the bottom case 2.

The magnitude of a force W to be exerted upon the leading end of the long arm 12 of the L-shaped bell crank 10 is reduced relative to a force F to be exerted upon the tension rod 15 by the caliper supporting bracket, and is expressed by the following equation:

$$W = \frac{L_1}{L_2} \times F$$

The lower end of a seat pipe 18 together with a partition fixture 20 is fixed to the lower end of the bottom case 2 by means of a bolt 22. The fixture 20 is sealed at 20a with respect to the bore 2a of the bottom case 2. In accordance with conventional practice, a piston, not shown, is integrally formed at the upper end of the seat pipe 18 and is hermetically sealed for sliding movement within the fork pipe and engages a conventional compression coil spring, not shown, housed in the fork pipe so that the telescopic front fork can be held in its extended state by spring force.

An oil pressure accumulating chamber 23 is defined in the annular space between the bore 2a of the bottom case 2 and the outer surface of the seat pipe 18 and partition fixture 20, and is able to communicate via the contraction regulator (to be described) with a communication chamber 24 defined by the bottom case 2 and the partition fixture 20. In turn, the chamber 24 is connected through openings 21 formed in the partition fixture 20 and openings 19 formed in the seat pipe 18 to a reservoir chamber 25 defined by the seat pipe 18 and the piston, not shown, at the upper end of the seat pipe. Oil, under pressure built up in the chamber 23 during a contraction stroke of the telescopic front fork 1 and attenuated by drag in the contraction regulator 30 as described below, passes through the communication chamber 24 into the reservoir chamber 25 so that the shocks and vibrations generated as a result of the motion of the motorcycle along a roadbed are absorbed by the co-actions of the spring force of the compression coil spring, not shown, and the passage drag of the contraction regulator 30.

To the upper end of the partition fixture 20, moreover, there is attached a check valve 29 which is constructed to include a seat 26 fixed on the seat pipe 18, a sliding valve member 27, and a compression coil spring 28 between the seat 26 and the valve member 27. At or near the end of the extension stroke of the telescopic front fork 1, the working oil in the reservoir chamber 25 is directly recirculated in a low pressure drag state into the oil pressure accumulating chamber 23 by way of the check valve 29.

The contraction regulator 30, which is located below the integral projection 9 and fixed to the front portion of the bottom case 2, includes a casing 31, and an anti-dive piston 38 which is fitted hermetically and slidably in a cylinder chamber 33 of the casing 31 and acted upon by a coil spring 53. The contraction regulator 30 also includes a rotary type adjusting orifice element 40 which is fitted in a bypass passage 35 having an end communicating with an opening 39 formed in the piston 38. An adjustment mechanism 46 fixes the angular position of the orifice member 40.

The casing 31 is provided with a main passage 32 to establish communication between openings 51 and 52 in the bottom case 2. The cylinder chamber 33 communicates through the opening 51 with the oil pressure accumulating chamber 23. The bypass passage 35 provides communication between the openings 51 and 52 via the opening 39 and the orifice member 40. The adjusting orifices member 40 has a center passage 41 communicating with radial ports 42, 43 and 44 of difference sizes. A groove 45 has no communication with the same center passage 41. The adjustment mechanism 46 comprises an adjusting bolt 47 acting through spring 49 and against ball 48 to cause the ball 48 partially to enter one of the ports or the groove 45, to hold the orifice member 40 in adjusted position.

Assuming that the front brake caliper 6 is not operated and therefore no braking force is applied to the front wheel 4, upward shocks applied to the front wheel 4 then cause oil under pressure in the accumulating chamber 23 to flow into the reservoir chamber 25 by way of the opening 51, main passage 32, opening 52, communication chamber 24, and the openings 21 and 19. As a result, the upward shocks exerted upon the front wheel 4 are absorbed by the co-actions of the spring force of the compression coil spring, not shown, which is positioned between the fork pipe and the upper end piston of the seat pipe 18, and by the drag of the tortuous oil passage thus described.

If a downward force is exerted upon the front wheel 4 when there is no braking force applied to the wheel, the anti-dive piston 38 is moved away from the bottom case 2 by the force of the coil spring 53, and working oil under pressure in the reservoir chamber 25 is introduced through the openings 19 and the check valve 29 into the oil pressure accumulating chamber 23. Since the passage drag is low in the course of this flow, the telescopic front fork 1 can be abruptly elongated.

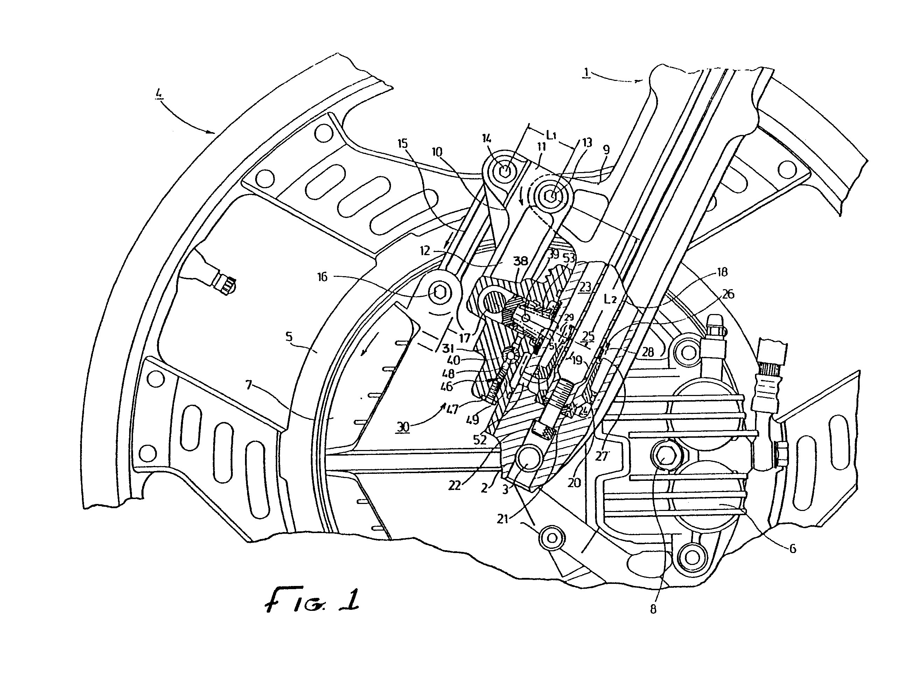

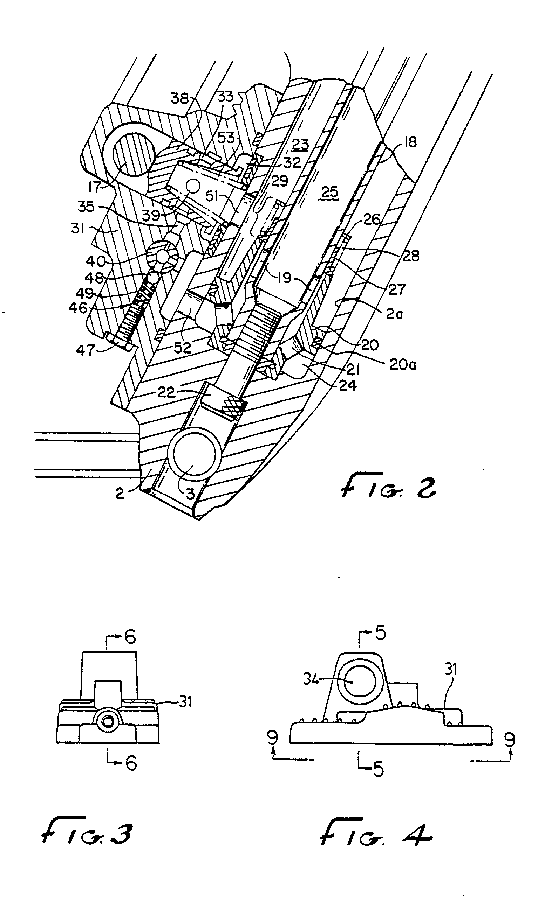

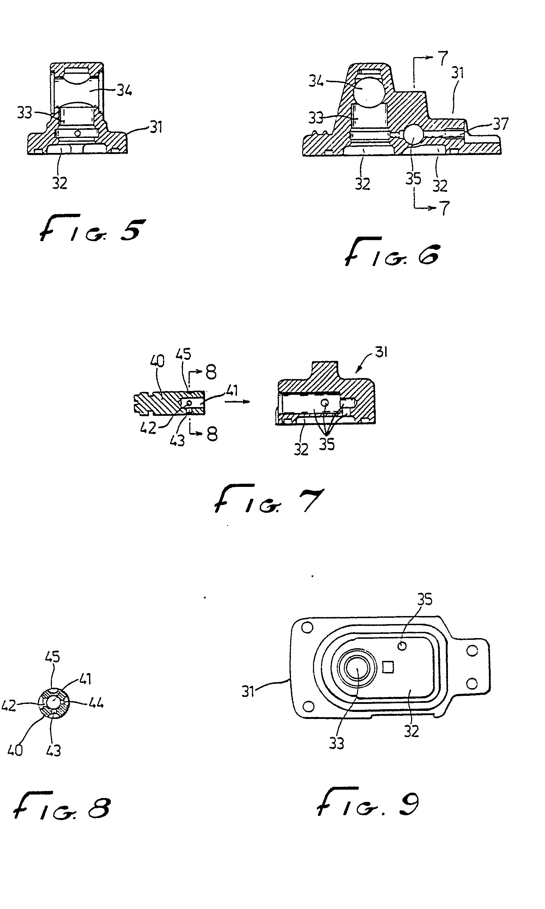

In a state in which the front brake caliper 6 is actuated so that braking force is applied to the front wheel 4, a force for effecting a counter-clockwise rotation, as viewed in Figure 1, is exerted upon the caliper supporting bracket 7, thereby to draw the tension rod 15 downward. In response to this action, the L-shaped bell crank 10 is rocked counter-clockwise about the pin 13, thereby to bring the anti-dive piston 38 into abutment contact with the bottom case 2 through the pin 17 against the spring force of the coil spring 53, so that the main passage 32 is blocked. In this particular state, by the force which is generated to compress the front fork 1 by the shift of the center of gravity of a motorcycle and rider and the inertial force during the braking operation, the working oil under pressure established in the oil pressure accumulating chamber 23 is carried into the reservoir chamber 25 by way of the opening 51, the piston opening 39, the bypass passage 35, one of the communication passages 42, 43 and 44, the center passage 41, the main passage 32, the opening 52, the communication chamber 24, and the openings 21 and 19. As a result, a higher passage drag than that developed during non-braking operation is established, to prevent the telescopic front fork 1 from diving.

If upward shocks are applied to the front wheel 4 when the front fork caliper 6 is in operation to apply braking force to the front wheel 4, the anti-dive piston 38 moves back and forth in the chamber 33 to follow the movements of the pin 17, so that the main passage 32 becomes open. As a result, the upward shocks are absorbed in a similar manner to those of the usual running operations.

Furthermore, by suitably varying the lengths of the shorter and longer arms 11 and 12 of the L-shaped bell crank 10, thereby to set their ratio $L_1/L_2$ at a desired value, the force to be exerted upon the anti-dive piston 38 can be readily selected. Also, by turning the rotary type adjusting orifice member 40 at a suitable interval of 90', one of the ports 42, 43 and 44 or the groove 45 may be brought into a position to face the bypass passage 35, whereby any of the passage drags of four steps (including a no-flow condition in the case of groove 45) can be selectively set so that the desired anti-dive characteristics can be established.

As described above, the present invention has been applied to a motorcycle, but it can also be applied to an automotive tricycle which has one front wheel and two rear wheels.

It will be noted that the present invention enables the contraction regulator to be disposed near the bottom of the bottom case, independently of the mounting position of the brake caliper, so that the passage of the front fork actuating oil can be shortened to reduce the passage drag.

It will thus be seen that, at least in its preferred and illustrated embodiment, the present invention provides a motorcycle front wheel anti-dive device which enjoys a high degree of freedom for setting the operation timing of a contraction regulator, and which has a simple and compact construction.

## Claims

1. A telescopic front fork assembly for a motorcycle or the like, having a bottom case (2) fast with an outer tube of the front fork and carrying the axle (3) for the front wheel (4), and a brake support member (7) which is movable relative to said bottom case (2) in response to braking torque applied to the wheel (4), an anti-dive device comprising a contraction regulator (30) fast with said bottom case (2) and having a main oil passage (32) therein, two further oil passages (51, 52) communicating the interior of said bottom case (2) with said main oil passage (32) for oil to flow therethrough during contraction of the telescopic assembly, a contraction regulating piston (38) in said main oil passage, and connecting means between said piston (38) and said brake support member (7) for operating said piston (38) by said movement of said support member (7) upon braking, in which the said two further oil passages comprise spaced openings (51, 52) in said bottom case (2) communicating with said main oil passage (32), and said connecting means comprises a lever (10) pivotally mounted on said bottom case and having a first arm (12) coupled with said contraction regulating piston (38) and a second arm (11) coupled with said support member (7), characterised in that the said lever (10) is a bell crank lever comprising said first arm (12) which is connected to said contraction regulating piston (38), and said second arm (11) which is connected to a part of said brake support member (7), the said contraction regulator (30) and said bell crank lever (10) both being located at the same side of said bottom case (2) and the direction of movement of said contraction regulating piston (38) being radial with respect to the axis of said outer tube.

2. Apparatus as claimed in claim 1, wherein said arm (12) of said bell crank lever (10) which is connected to said contraction regulating piston (38) extends alongside said bottom case and is also movable radially with respect to the axis of said outer tube.

3. Apparatus as claimed in claim 1 or 2, wherein said contraction regulator device (30) and said bell crank lever (10) are both located at the forward side of said bottom case (2), and a brake caliper (6) is located at the rearward side thereof.

4. Apparatus as claimed in claim 3, wherein a tension link (15) connects said second arm (11) of said bell crank lever (10) to a part of said brake support member (7) remote from said brake caliper.

5. Apparatus as claimed in any preceding claim, wherein said main oil passage (23) is partly defined by a wall of said bottom case in which said spaced openings (51, 52) are formed, whereby said openings open directly into said main oil passage.

6. Apparatus as claimed in any preceding claim, wherein said spaced openings (51, 52) are axially spaced relative to the axis of said outer tube.

## Patentansprüche

1. Antinick-Vorrichtung für eine Teleskop-Vordergabel, beispielsweise eines Motorrades, die ein fest mit einem Vorderradgabel-Außenrohr verbundenes und die Achse in (3) für das Vorderrad (4) tragendes Basisgehäuse (2) sowie ein als Funktion des auf das Rad (4) wirkenden Bremsdrehmomentes relativ zum Basisgehäuse (2) bewegliches Bremshalterungselement (7) aufweist, mit einem fest mit dem Basisgehäuse (2) verbundenen und einen Hauptöldurchlaß (32) aufweisenden Kontraktionsregler (30), zwei weiteren, das Innere des Basisgehäuses (2) mit dem Hauptöldurchlaß (32) verbindenden Öldurchlässen (51, 52), durch die während der Kontraktion der Teleskopgabel Öl fließt, einem Kontraktionsreglerkolben (38) im Hauptöldurchlaß und mit einer Verbindungseinrichtung zwischen den Kolben (38) und dem Bremshalterungselement (7) zur Betätigung des Kolbens (38) durch die Bewegung des Bremshalterungselementes (7) beim Bremsen, wobei die beiden weiteren Öldurchlässe mit dem Hauptöldurchlaß (32) in Verbindung stehende beabstandete Öffnungen (51, 52) im Basisgehäuse (2) aufweisen und die Verbindungseinrichtung einen schwenkbar auf dem Basisgehäuse montierten sowie einen mit dem Kontraktionsreglerkolben (38) gekoppelten ersten Arm (12) und einen mit dem Halterungselement (7) gekoppelten zweiten Arm (11) besitzenden Hebel (10) aufweist, dadurch gekennzeichnet, daß der Hebel (10) ein mit dem ersten Arm (12) mit dem Kontraktionsreglerkolben (38) und mit dem zweiten Arm (11) mit einem Teil des Bremshalterungselementes (7) verbundener Winkelhebel ist, daß der Kontraktionsregler (30) sowie der Winkelhebel (10) beide auf der gleichen Seite des Basisgehäuses (2) angeordnet sind und daß die Bewegungseinrichtung des Kontraktionsreglerkolbens (38) radial in Bezug auf die Achse des Außenrohres verläuft.

2. Vorrichtung nach Anspruch 1, in welcher der Arm (12) des Winkelhebels (10), der mit dem Kontraktionsreglerkolben (38) verbunden ist, längs des Basisgehäuses verläuft und weiterhin radial in Bezug auf die Achse des Außenrohres beweglich ist.

3. Vorrichtung nach Anspruch 1 oder 2, in welcher die Kontraktionsreglereinrichtung (30) und der Winkelhebel (10) beide auf der Vorderseite des Basisgehäuses (2) angeordnet sind und an seiner Hinterseite ein Bremsabtaster (6) angeordnet ist.

4. Vorrichtung nach Anspruch 3, bei der eine Zugverbindung (15) den zweiten Arm (11) des Winkelhebels (10) mit einem vom Bremsabtaster entfernten Teil des Bremshalterungselementes (7) verbindet.

5. Vorrichtung nach den vorhergehenden Ansprüchen, bei welcher der Hauptöldurchlaß (23) teilweise durch eine Wand des Basisgehäuses definiert ist, in der die beabstandeten Öffnungen (51, 52) ausgebildet sind, wodurch die Öffnungen sich direkt in den Hauptöldurchlaß öffnen.

6. Vorrichtung nach den vorhergehenden Ansprüchen, bei der die beabstandeten Öffnungen (51, 52) relativ zur Achse des Außenrohres axial beabstandet sind.

## Revendications

1. Assemblage de fourche avant télescopique pour un motocycle ou équivalent, ayant une boîte inférieure (2) fixée à un tube extérieur de la fourche avant et portant l'essieu (3) de la roue avant (4), et un organe de support de frein (7) qui est mobile par rapport à ladite boîte inférieure (2) en réponse au couple de freinage appliqué à la roue (4), un dispositif anti-plongée comprenant un régulateur de contraction (30) fixé à ladite boîte inférieure (2) et ayant un passage d'huile principal (32) en-dedans, deux passages d'huile supplémentaires (51, 52) faisant communiquer l'intérieur de ladite boîte inférieure (2) avec ledit passage d'huile principal (32) pour que l'huile coule au travers pendant la contraction de l'assemblage télescopique, un piston de réglage de contraction (38) dans ledit passage d'huile principal, et un moyen de raccordement entre ledit piston (38) et ledit organe de support de frein (7) pour actionner ledit piston (38) par ledit mouvement dudit organe de support (7) lors du freinage, dans lequel lesdits deux passages d'huile supplémentaires comprennent des ouvertures espacées (51, 52) dans ladite boîte inférieure (2) communiquant avec ledit passage d'huile principal (32), et ledit moyen de raccordement comprend un levier (10) monté de manière pivotante sur ladite boîte inférieure et ayant un premier bras (12) couplé audit piston de réglage de contraction (38) et un second bras (11) couplé audit membre de support (7), caractérisé en ce que ledit levier (10) est un levier coudé comprenant ledit premier bras (12) qui est raccordé audit piston de réglage de contraction (38), et ledit second bras (11) qui est raccordé à une partie dudit organe de support de frein (7), ledit regulateur de contraction (30) et ledit levier coudé (10) étant tous deux situés du même côté de ladite boîte inférieure (2) et la direction du mouvement dudit piston de réglage de contraction (38) étant radiale par rapport à l'axe dudit tube extérieur.

2. Appareil selon la revendication 1, dans lequel ledit bras (12) dudit levier coudé (10) qui est raccordé audit piston de réglage de contraction (38) s'étend le long de ladite boîte inférieure et est également mobile radialement par rapport à l'axe du tube extérieur.

3. Appareil selon la revendication 1 ou 2, dans lequel ledit dispositif régulateur de contraction (30) et ledit levier coudé (10) sont tous deux situés sur le côté avant de ladite boîte inférieure (2), et un étrier de frein (6) est situé sur le côté arrière de celle-ci.

4. Appareil selon la revendication 3, dans lequel une tige de tension (15) raccorde ledit second bras (11) dudit levier coudé (10) à une partie dudit organe de support de frein (17) éloignée dudit étrier de frein.

5. Appareil selon l'une quelconque des précédentes revendications, dans lequel ledit passage d'huile principal (23) est en partie déterminé par une paroi de ladite boîte inférieure dans laquelle sont formées lesdites ouvertures espacées (51, 52), de sorte que lesdites ouvertures s'ouvrent directement dans ledit passage d'huile principal.

6. Appareil selon l'une quelconque des précédentes revendications, dans lequel lesdites ouvertures espacées (51, 52) sont espacées axialement par rapport à l'axe dudit tube extérieur.

Fig. 1

0 075 462

FIG. 2

FIG. 3

FIG. 4

2

FIG. 5

FIG. 6

FIG. 7

FIG. 8

FIG. 9